# EUROPEAN PATENT SPECIFICATION

(11) **EP 4 066 923 B1**
(45) Date of publication and mention of the grant of the patent: **06.05.2026**
(21) Application number: 21165942.0
(22) Date of filing: 30.03.2021
(51) Int. Cl.: B01D 53/94, F01N 3/20, F01N 13/00

(54) **CATALYST FOR THE ABATEMENT OF AMMONIA FROM THE EXHAUST OF GASOLINE INTERNAL COMBUSTION ENGINES**
KATALYSATOR ZUR ENTFERNUNG VON AMMONIAK AUS DEM ABGAS VON BENZINVERBRENNUNGSMOTOREN
CATALYSEUR DE RÉDUCTION D'AMMONIAC DE L'ÉCHAPPEMENT DE MOTEURS ESSENCE À COMBUSTION INTERNE

(43) Date of publication of application: 05.10.2022
(73) Proprietor: Umicore AG & Co. KG, 63457 Hanau-Wolfgang (DE)
(72) Inventor: COLOMBO, Massimo, 60314 Frankfurt am Main (DE); BRAUN, Carolin, 63225 Langen (DE); SCHMIDT, Marcus, 65462 Ginsheim (DE); SEYLER, Michael, 63814 Mainaschaff (DE); SERVAIS, Philippe, 6742 Chantemelle (BE)

(56) References cited:
- EP-A1- 3 476 480
- EP-A1- 3 782 726
- US-A1- 2015 152 768

## Description

The present invention relates to a catalyst for the abatement of ammonia from the exhaust of gasoline internal combustion engines which comprises several material zones.

It is well known in the field of combustion engines that fuel combustion is not complete and yield emissions of pollutants like unburned hydrocarbons (HC), carbon monoxide (CO), nitrogen oxides (NOₓ) and particulate matter (PM). In order to improve air quality, emission limits legislations are in place to achieve lower emissions of pollutants from stationary applications and from mobile sources. For mobile sources like passenger cars, primary measures enabled achieving decrease in the emission of pollutants. Improvement of fuel-air mixing as primary measure yielded considerable diminution of pollutants. However, due to more stringent legislations over the years, the use of heterogeneous catalysts has been made inevitable.

For gasoline engines, the so-called three-way catalyst (TWC) enables the elimination of HC, CO and NOₓ. Optimal use of the TWC is around Lambda = 1 +/-0.005 where the air/fuel ratio is equal to 14.56. Above these values, the exhaust gas is said lean, and CO and HC are catalytically oxidized to carbon dioxide and water. Below this value, the exhaust gas is said rich and mainly NOₓ is reduced to nitrogen N₂ using e.g. CO as reducing agent.

Optimal conversion of HC, CO and NOₓ is achieved at Lambda = 1. However, gasoline engines operate under oscillating conditions between slightly lean and slightly rich conditions. Under purely rich conditions, the conversion of hydrocarbon drops rapidly. In order to broaden the optimal operation of a TWC, oxygen storage material (OSM) in the form of Ce-mixed oxides were included in the formulation of the TWC.

Under certain operating conditions ammonia can be formed on TWC catalysts, resulting in ammonia being present in the exhaust stream. This is undesirable in view of its toxic effects and consequently ammonia emissions are increasingly limited in the exhaust gas legislation.

To avoid ammonia emissions, so called ammonia slip catalysts (ASC) have been developed and are mainly used in the exhaust gas of modern Diesel engines. ASC catalysts normally contain a platinum group metal (PGM) component, in particular platinum, to carry out the oxidation of ammonia at temperatures as low as possible. However, PGM based materials do not only oxidize ammonia to nitrogen, but can as well form nitrogen oxides, in particular N₂O, NO and NO₂. To improve the selectivity of the ammonia oxidation component, it is usually combined with an SCR catalyst which is to re-reduce the nitrogen oxides formed. SCR catalyst which can be used are for example zeolite based or vanadium based in different spatial arrangements. In case of a layered arrangement the SCR layer is normally overcoating the PGM containing layer.

This concept cannot easily be exceeded on the exhaust of gasoline engines, because ammonia cannot be oxidized in rich exhaust gas exhausted by the gasoline engine. Consequently, a different working mode is needed in case of the application of an ASC catalyst to the exhaust gas of gasoline engines. During rich phase operation, the SCR layer acts as a buffer, storing the ammonia that is produced by the upstream TWC. During lean phase operations when oxygen is present in the exhaust stream, ammonia can be oxidized by the PGM layer.

Such an operating mode has the following limitations. First, the amount of ammonia that can be stored is limited to the ammonia storage capacity of the SCR layer. Once the capacity is reached, ammonia emissions will occur. This problem might be even more severe after catalyst ageing, which typically results in a loss of ammonia storage capacity. Second, the ammonia stored on the SCR layer at a given temperature can desorb at any time following a temperature increase. If such a temperature increase occurs during rich operation, the ammonia will not be converted by the ASC catalyst, resulting in ammonia emissions.

Therefore, a solution is needed to overcome these limitations and further reduce the possibility of ammonia emissions in the exhausts of gasoline engines.

GB1453456A discloses catalysts which decompose ammonia to nitrogen and hydrogen. Such catalysts include NiO and NiO containing materials. It is said that catalysts which contain large amounts of NiO (approximately over 50 Mol%) exhibit a substantial catalytic action for the decomposition of ammonia.

EP0723805A2 describes a process which comprises converting NOx components to ammonia in a reducing atmosphere (e.g. via a three-way catalyst) and resolving the ammonia via an NH₃ decomposing catalyst in an oxidizing atmosphere when the temperature of the catalyst is in a predetermined temperature range.

EP3782726A1 discloses a catalyst for ammonia conversion according to the prior art, comprising a carrier substrate on which are arranged two differently composed material zones.

It has now been found that the catalyst described and defined below solves the problems described above.

The present invention relates to a catalyst comprising a carrier body having a length L extending between a first end face and a second end face, and differently composed material zones A, B and C arranged on the carrier body, wherein
- material zone A comprises rhodium and/or nickel and/or cerium,
- material zone B comprises platinum, and
- material zone C comprises a zeolite which is able to store ammonia and to catalyze the selective catalytic reduction of NOx.

In case material zone A comprises rhodium, rhodium is preferably present in form of rhodium metal. In case material zone A comprises nickel, nickel is preferably present in form of nickel oxide, in particular in form of NiO. In case material zone A comprises cerium, cerium is preferably present in form of ceria, in particular CeO₂.

In case material zone comprises rhodium, rhodium is usually present in an amount of 0.01 to 1 g/l, based on the volume of the carrier body and calculated as rhodium metal. In case material zone comprises nickel, nickel is usually present in an amount of 1 to 100 g/l, based on the volume of the carrier body and calculated as NiO.

In case material zone comprises cerium, cerium is usually present in an amount of 1 to 100 g/l, based on the volume of the carrier body and calculated as CeO₂.

In case material zone A comprises rhodium and nickel, the weight ratio of rhodium and nickel is preferably 1:1000 to 1:1, more preferably 1:130 to 1:70, calculated as rhodium metal and NiO.

In case material zone A comprises rhodium and cerium, the weight ratio of rhodium and cerium is preferably 1:1000 to 1:1, more preferably 1:130 to 1:70, calculated as rhodium metal and CeO₂.

In case material zone A comprises nickel and cerium, the weight ratio of nickel and cerium is preferably 1:100 to 100:1, more preferably 1:3 to 3:1, calculated as NiO and CeO₂.

Usually, material zone A comprises rhodium and/or nickel and/or cerium supported on one or more carrier oxides A.

A suitable carrier oxide A is advantageously high-melting, i.e. its melting point is at a sufficient distance above the temperatures occurring during the intended operation of the catalyst according to the invention. It is also advantageously of high surface area and preferably has a BET surface of 50 to 200 m²/g, (determined according to DIN 66132). The carrier oxide A is in particular selected from the group consisting of aluminum oxide, doped aluminum oxide, silicon oxide, titanium dioxide, doped titanium oxide, zirconium oxide, mixed oxides of one or more thereof and a zeolite. If material zone A comprises rhodium and/or nickel carrier oxide A can as well be ceria.

Doped aluminum oxides are, for example, aluminum oxides doped with silicon oxide, zirconium oxide and/or titanium oxide and lanthanum-doped aluminum oxide In the latter lanthanum is used in amounts of from 1 to 10% by weight, preferably from 3 to 6% by weight, each calculated as La₂O₃ and relative to the weight of the stabilized aluminum oxide.

Zeolites which can be used as carrier oxide A are for example zeolites of the structure types ABW, AEI, AFX, BEA, CHA, DDR, ERI, ESV, FAU, FER, KFI, LEV, LTA, MER MFI, MWW, SOD or STT and are preferably not exchanged with copper and/or iron. Preferably, carrier oxide A is aluminum oxide.

Material zone B comprises platinum which is preferably present in form of platinum metal.

Material zone B usually comprises platinum in an amount of 0.017 to 0.18 g/ based on the volume of the carrier body and calculated as platinum metal.

Usually, material zone B comprises platinum supported on a carrier oxide B.

A suitable carrier oxide B is advantageously high-melting, i.e. its melting point is at a sufficient distance above the temperatures occurring during the intended operation of the catalyst according to the invention. It is also advantageously of high surface area and preferably has a BET surface of 50 to 200 m²/g, (determined according to DIN 66132).

The carrier oxide B is in particular selected from the group consisting of aluminum oxide, doped aluminum oxide, silicon oxide, titanium dioxide, doped titanium oxide, cerium oxide, zirconium oxide, mixed oxides of one or more thereof and a zeolite.

Doped aluminum oxides are, for example, aluminum oxides doped with silicon oxide, zirconium oxide and/or titanium oxide and lanthanum-doped aluminum oxide In the latter lanthanum is used in amounts of from 1 to 10% by weight, preferably from 3 to 6% by weight, each calculated as La₂O₃ and relative to the weight of the stabilized aluminum oxide.

Zeolites which can be used as carrier oxide B are for example zeolites of the structure types ABW, AEI, AFX, BEA, CHA, DDR, ERI, ESV, FAU, FER, KFI, LEV, LTA, MER MFI, MWW, SOD or STT and are preferably not exchanged with copper and/or iron..

Preferably, carrier oxide B is aluminum oxide.

Preferably, material zone B comprises platinum supported on aluminum oxide.

Zeolites are two- or three-dimensional structures, the smallest structures of which can be considered to be SiO₄ and AlO₄ tetrahedra. These tetrahedra come together to form larger structures, wherein two are connected each time via a common oxygen atom. Different-sized rings may be formed thereby - for example, rings of four, six, or even nine tetrahedrally-coordinated silicon or aluminum atoms. The different types of zeolite are often defined via the largest ring size, because this size determines which guest molecules can penetrate the zeolite structure, and which not. It is customary to differentiate between large-pore zeolites with a maximum ring size of 12, medium-pore zeolites with a maximum ring size of 10, and small-pore zeolites with a maximum ring size of 8.

Furthermore, zeolites are grouped by the Structural Commission of the International Zeolite Association into structural types which are each provided with a three-letter code; see, for example, Atlas of Zeolite Framework Types, Elsevier, 5th edition, 2001.

The zeolite of material zone C which is able to store ammonia and to catalyze the selective catalytic reduction of NOₓ can be a large-pore, medium-pore or small-pore zeolite and is exchanged with copper or iron. Examples of suitable zeolites belong to the structural type ABW, AEI, AFX, BEA, CHA, DDR, ERI, ESV, FAU, FER, KFI, LEV, LTA, MER MFI, MWW, SOD or STT.

Preferably, the zeolite of material zone C is copper exchanged and belongs in particular to the structural type AEI, AFX, CHA or LEV or is iron exchanged and belongs in particular to the structural type BEA.

More preferably, the zeolite of material zone C is Cu-AEI, Cu-CHA or Fe-BEA.

The zeolite of material zone C preferably has an SAR (silica-to-alumina ratio) value of 2 to 100, more preferably 5 to 50, and most preferably 10 to 40.

In the context of the present invention the term zeolites also includes molecular sieves, which are sometimes also referred to as "zeolite-like" compounds. Molecular sieves are preferred, if they belong to one of the aforementioned structure types. Examples include silica aluminum phosphate zeolites, which are known by the term, SAPO, and aluminum phosphate zeolites, which are known by the term AIPO.

Optionally, the carrier body of the inventive catalyst comprises a material zone D which comprises a zeolite which is able to store ammonia and to catalyze the selective catalytic reduction of NOx.

Material zone D can be identical with material zone C, which means contains the identical components in the identical amounts. Material zone D can also be different from material zone C. In the latter case it can for example comprise the identical components but in different amounts or it can comprise completely or in part different components.

The catalyst according to the present invention comprises a carrier body. This may be a flow-through substrate or a wall-flow filter.

A wall-flow filter is a supporting body that comprises channels of length L which extend in parallel between a first and a second end of the wall-flow filter, which are alternatingly sealed either at the first or second end, and which are separated by porous walls. A flow-through substrate differs from a wall-flow filter, in particular in that the channels of length L are open at its two ends.

In an uncoated state, wall-flow filters have, for example, porosities of 30 to 80% - in particular, 50 to 75%. In the uncoated state, their average pore size is 5 to 30 micrometers, for example.

Generally, the pores of the wall-flow filter are so-called open pores, i.e., they have a connection to the channels. Furthermore, the pores are normally interconnected with one another. This enables easy coating of the inner pore surfaces, on the one hand, and an easy passage of the exhaust gas through the porous walls of the wall-flow filter, on the other.

Flow-through substrates are known to the person skilled in the art, as are wall-flow filters, and are commercially available. They consist, for example, of silicon carbide, aluminum titanate or cordierite.

According to the invention, the material zones A, B, C and if present material zone D are present in the form of coatings on the carrier body, with other words form washcoat layers or washcoat zones on the carrier body. They can be arranged on the carrier body in various ways.

According to the invention,
- material zone A extends starting from the first end face of the carrier body over 10 to 90 % of the length L,
- material zone B extends starting from the second end face of the carrier body over 10 to 90 % of the length L and
- material zone C extends starting from the second end face of the carrier body over 10 to 90 % of the length L,

wherein L = L_{A} + L_{B}, wherein L_{A} is the length of material zone A and L_{B} is the length of the material zone B and
wherein material zone C is located on top of material zone B.

In a preferred first embodiment material zones A, B and C all extend over a length of 40 to 60 % of the length L.

In a more preferred first embodiment material zones A, B and C all extend over 50 % of the length L.

In a second embodiment,
- material zone A extends starting from the first end face of the carrier body over 10 to 90 % of the length L,
- material zone B extends starting from the second end face of the carrier body over 10 to 90 % of the length L
- material zone C extends starting from the second end face of the carrier body over 10 to 90 % of the length L, and
- material zone D extends starting from the first end face of the carrier body over 10 to 90 % of the length L,

wherein L = L_{A} + L_{B} = L_{C} + L_{D}, wherein L_{A} is the length of material zone A, L_{B} is the length of the material zone B, L_{C} is the length of material zone C and L_{D} is the length of material zone D and
wherein material zone C is located on top of material zone B and material zone D is located on top of material zone A.

In a preferred second embodiment material zones A, B, C and D all extend over a length of 40 to 60 % of the length L.

In a more preferred second embodiment material zones A, B, C and D all extend over 50 % of the length L.

In an even more preferred second embodiment material zones A, B, C and D all extend over 50 % of the length L and material zones C and D are identical. This means that material zones C and D form a uniform layer on top of material zones A and B.

Catalysts according to the present invention can be produced by coating suitable carrier bodies in a manner known per se by means of coating suspensions, so-called washcoats.

The suspensions are obtained by methods known by the skilled persons and are then ground and applied to the carrier body by one of the standard coating methods. After each coating step, the coated part is dried in a hot air stream and in some cases calcined.

The Catalysts according to the present invention are suitable for purifying the exhaust gases of gasoline engines, in particular they are suitable to eliminate ammonia formed by an upstream three-way catalyst. Material zones A, B and C take on different functions.

Material zone A takes over the catalytic decomposition of ammonia to nitrogen in the absence of oxygen, i.e. under rich operating conditions. Material zone B takes over the oxidation of ammonia in the presence of oxygen, i.e. under lean operating conditions. Finally, material zone C and if present material zone D take over the storage and release of ammonia.

The present invention thus also relates to a method for eliminating ammonia from gasoline exhaust gases, which is characterized in that the gasoline exhaust gas is conducted through a catalyst as described and defined above. In one embodiment of the method the gasoline exhaust gas flows into the carrier body at the first end face and flows out of the carrier body at the second end face. In another embodiment of the method the gasoline exhaust gas flows into the carrier body at the second end face and flows out of the carrier body at the first end face.

The catalyst according to the present invention is used in particular as constituent of an exhaust gas purification system which includes a three-way catalyst. In such system the catalyst of the present invention is arranged so that the exhaust gas flows through the three-way catalyst first and subsequently through the catalyst according to the invention.

In addition to the three-way catalyst and the catalyst of the invention, the exhaust gas purification system can comprise a so-called gasoline particulate filter (GPF) which is able to reduce or eliminate particle emissions contained in the exhaust gas of gasoline engines.

Three-way catalysts and gasoline particle filters are known to the skilled person and extensively described in literature, including relevant textbooks.

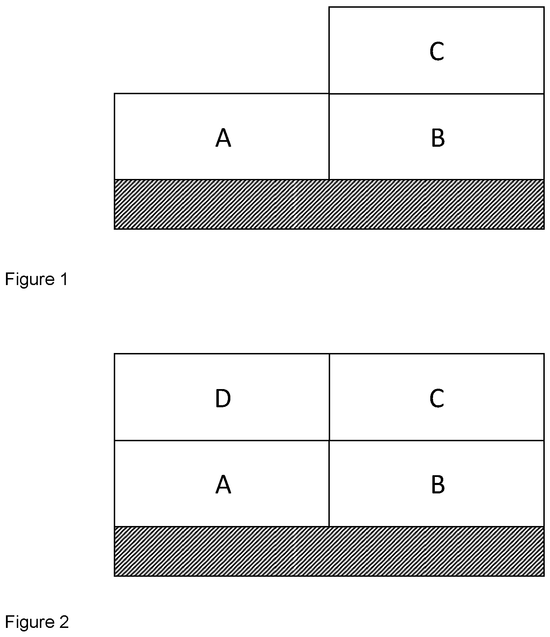

Figure 1 shows a catalyst of the present invention, where material zones A, B and C all extend over 50 % of the length L and where material zone A starts from the first end face and material zones B and C from the second end face of the carrier body.
Figure 2 shows a catalyst of the present invention which is based on the catalyst shown in figure 1 but which comprises in addition material zone D which extends starting from the first end face over 50% of the length L and which is located on material zone A.

## Claims

1. Catalyst comprising a carrier body having a length L extending between a first end face and a second end face, and differently composed material zones A, B and C arranged on the carrier body, wherein
- material zone A comprises rhodium and/or nickel and/or cerium,
- material zone B comprises platinum, and
- material zone C comprises a zeolite which is able to store ammonia and to catalyze the selective catalytic reduction of NOx, and
optionally a material zone D which comprises a zeolite which is able to store ammonia and to catalyze the selective catalytic reduction of NOx,
**characterized in that**,
material zones A, B, C and if present material zone D are present in the form of coatings on the carrier body; andmaterial zone A extends starting from the first end face of the carrier body over 10 to 90 % of the length L,
material zone B extends starting from the second end face of the carrier body over 10 to 90 % of the length L and
material zone C extends starting from the second end face of the carrier body over 10 to 90 % of the length L,
wherein L = LA + LB, wherein LA is the length of material zone A and LB is the length of the material zone B and
wherein material zone C is located on top of material zone B.

2. Catalyst according to claim 1, **characterized in that** material zone A comprises rhodium in an amount of 0.01 to 1 g/l, based on the volume of the carrier body and calculated as rhodium metal.

3. Catalyst according to claim 1 and/or 2, **characterized in that** material zone A comprises nickel in an amount of 1 to 100 g/l, based on the volume of the carrier body and calculated as NiO.

4. Catalyst according to one or more of claims 1 to 3, **characterized in that** material zone A comprises cerium in an amount of 1 to 100 g/l, based on the volume of the carrier body and calculated as CeO2.

5. Catalyst according to one or more of claims 1 to 4, **characterized in that** material zone B comprises platinum supported on aluminum oxide.

6. Catalyst according to one or more of claims 1 to 5, **characterized in that** material zone C comprises Cu-AEI, Cu-CHA or Fe-BEA.

7. Catalyst according to one or more of claims 1 to 6, **characterized in that** it comprises a material zone D which comprises a zeolite which is able to store ammonia and to catalyze the selective catalytic reduction of NOx.

8. Catalyst according to claim 7, **characterized in that** material zones C and D contain the identical components in the identical amounts.

9. Catalyst according to claim 1, **characterized in that**
material zone A extends starting from the first end face of the carrier body over 10 to 90 % of the length L,
material zone B extends starting from the second end face of the carrier body over 10 to 90 % of the length L
material zone C extends starting from the second end face of the carrier body over 10 to 90 % of the length L, and
material zone D extends starting from the first end face of the carrier body over 10 to 90 % of the length L,
wherein L = LA + LB = LC + LD, wherein LA is the length of material zone A, LB is the length of the material zone B, LC is the length of material zone C and LD is the length of material zone D and
wherein material zone C is located on top of material zone B and material zone D is located on top of material zone A.

10. Catalyst according to claim 9, **characterized in that** material zones A, B, C and D all extend over 50 % of the length L and material zones C and D are identical.

11. Method for eliminating ammonia from gasoline exhaust gases, **characterized in that** the gasoline exhaust gas is conducted through a catalyst according to one or more of claims 1 to 9.

12. Exhaust gas purification system which comprises a three-way catalyst and a catalyst according to one or more of claims 1 to 9.

## Patentansprüche

1. Katalysator, umfassend einen Trägerkörper mit einer Länge L, die sich zwischen einer ersten Stirnfläche und einer zweiten Stirnfläche erstreckt, sowie unterschiedlich zusammengesetzte Materialzonen A, B und C, die auf dem Trägerkörper angeordnet sind, wobei
- Materialzone A Rhodium und/oder Nickel und/oder Cerium umfasst,
- Materialzone B Platin umfasst, und
- Materialzone C ein Zeolith umfasst, das Ammoniak speichern und die selektive katalytische Reduktion von NOx katalysieren kann,
und optional eine Materialzone D, die ein Zeolith umfasst, das Ammoniak speichern und die selektive katalytische Reduktion von NOx katalysieren kann,
**dadurch gekennzeichnet, dass**
die Materialzonen A, B, C und - falls vorhanden - D in Form von Beschichtungen auf dem Trägerkörper vorliegen; und
Materialzone A von der ersten Stirnfläche des Trägerkörpers ausgehend über 10 bis 90 % der Länge L verläuft,
Materialzone B von der zweiten Stirnfläche des Trägerkörpers ausgehend über 10 bis 90 % der Länge L verläuft und
Materialzone C von der zweiten Stirnfläche des Trägerkörpers ausgehend über 10 bis 90 % der Länge L verläuft,
wobei L = LA + LB ist, wobei LA die Länge der Materialzone A und LB die Länge der Materialzone B ist, und
wobei die Materialzone C auf der Materialzone B angeordnet ist.

2. Katalysator nach Anspruch 1, **dadurch gekennzeichnet, dass** Materialzone A Rhodium in einer Menge von 0,01 bis 1 g/l bezogen auf das Volumen des Trägerkörpers und berechnet als Rhodium-Metall umfasst.

3. Katalysator nach Anspruch 1 und/oder 2, **dadurch gekennzeichnet, dass** Materialzone A Nickel in einer Menge von 1 bis 100 g/l bezogen auf das Volumen des Trägerkörpers und berechnet als NiO umfasst.

4. Katalysator nach einem oder mehreren der Ansprüche 1 bis 3, **dadurch gekennzeichnet, dass** Materialzone A Cerium in einer Menge von 1 bis 100 g/l bezogen auf das Volumen des Trägerkörpers und berechnet als CeO2 umfasst.

5. Katalysator nach einem oder mehreren der Ansprüche 1 bis 4, **dadurch gekennzeichnet, dass** Materialzone B Platin umfasst, das auf Aluminiumoxid getragen ist.

6. Katalysator nach einem oder mehreren der Ansprüche 1 bis 5, **dadurch gekennzeichnet, dass** Materialzone C Cu-AEI, Cu-CHA oder Fe-BEA umfasst.

7. Katalysator nach einem oder mehreren der Ansprüche 1 bis 6, **dadurch gekennzeichnet, dass** er eine Materialzone D umfasst, die ein Zeolith enthält, das Ammoniak speichern und die selektive katalytische Reduktion von NOx katalysieren kann.

8. Katalysator nach Anspruch 7, **dadurch gekennzeichnet, dass** die Materialzonen C und D identische Komponenten in identischen Mengen enthalten.

9. Katalysator nach Anspruch 1, **dadurch gekennzeichnet, dass**
- Materialzone A von der ersten Stirnfläche des Trägerkörpers ausgehend über 10 bis 90 % der Länge L verläuft,
- Materialzone B von der zweiten Stirnfläche des Trägerkörpers ausgehend über 10 bis 90 % der Länge L verläuft,
- Materialzone C von der zweiten Stirnfläche des Trägerkörpers ausgehend über 10 bis 90 % der Länge L verläuft, und
- Materialzone D von der ersten Stirnfläche des Trägerkörpers ausgehend über 10 bis 90 % der Länge L verläuft,
wobei L = LA + LB = LC + LD ist, wobei LA die Länge der Materialzone A, LB die Länge der Materialzone B, LC die Länge der Materialzone C und LD die Länge der Materialzone D ist, und
wobei Materialzone C auf der Materialzone B und Materialzone D auf der Materialzone A angeordnet ist.

10. Katalysator nach Anspruch 9, **dadurch gekennzeichnet, dass** alle Materialzonen A, B, C und D jeweils über 50 % der Länge L verlaufen und die Materialzonen C und D identisch sind.

11. Verfahren zur Eliminierung von Ammoniak aus Ottomotor-Abgasen, **dadurch gekennzeichnet, dass** das Ottomotor-Abgas durch einen Katalysator nach einem oder mehreren der Ansprüche 1 bis 9 geleitet wird.

12. Abgasreinigungssystem, das einen Drei-Wege-Katalysator und einen Katalysator nach einem oder mehreren der Ansprüche 1 bis 9 umfasst.

## Revendications

1. Catalyseur comprenant un corps porteur ayant une longueur L s'étendant entre une première face d'extrémité et une seconde face d'extrémité, et des zones de matériau A, B et C, de compositions différentes, disposées sur le corps porteur, dans lequel:
- la zone de matériau A comprend du rhodium et/ou du nickel et/ou du cérium,
- la zone de matériau B comprend du platine, et
- la zone de matériau C comprend un zéolithe capable de stocker l'ammoniac et de catalyser la réduction catalytique sélective des NOx,
ainsi qu'éventuellement une zone de matériau D comprenant un zéolithe capable de stocker l'ammoniac et de catalyser la réduction catalytique sélective des NOx,
**caractérisé en ce que** les zones de matériau A, B, C et, si présente, la zone de matériau D sont présentes sous forme de revêtements sur le corps porteur ; et la zone de matériau A s'étend depuis la première face d'extrémité du corps porteur sur 10 à 90 % de la longueur L, la zone de matériau B s'étend depuis la seconde face d'extrémité du corps porteur sur 10 à 90 % de la longueur L, et la zone de matériau C s'étend depuis la seconde face d'extrémité du corps porteur sur 10 à 90 % de la longueur L, où L = LA + LB, LA étant la longueur de la zone A et LB étant la longueur de la zone B, et où la zone C est située au-dessus de la zone B.

2. Catalyseur selon la revendication 1, **caractérisé en ce que** la zone A comprend du rhodium en une quantité de 0,01 à 1 g/l.

3. Catalyseur selon la revendication 1 et/ou 2, **caractérisé en ce que** la zone A comprend du nickel en une quantité de 1 à 100 g/l.

4. Catalyseur selon l'une des revendications 1 à 3, **caractérisé en ce que** la zone A comprend du cérium en une quantité de 1 à 100 g/l.

5. Catalyseur selon l'une des revendications 1 à 4, **caractérisé en ce que** la zone B comprend du platine supporté sur de l'oxyde d'aluminium.

6. Catalyseur selon l'une des revendications 1 à 5, **caractérisé en ce que** la zone C comprend Cu-AEI, Cu-CHA ou Fe-BEA.

7. Catalyseur selon l'une des revendications 1 à 6, **caractérisé en ce qu'**il comprend une zone D comprenant un zéolithe.

8. Catalyseur selon la revendication 7, **caractérisé en ce que** les zones C et D contiennent les mêmes composants.

9. Catalyseur selon la revendication 1, **caractérisé en ce que** les zones A, B, C et D s'étendent chacune sur 10 à 90 % de la longueur L.

10. Catalyseur selon la revendication 9, **caractérisé en ce que** toutes les zones s'étendent sur 50 % de L et que C et D sont identiques.

11. Procédé pour éliminer l'ammoniac des gaz d'échappement d'essence au moyen du catalyseur.

12. Système de purification comprenant un catalyseur trois voies et le catalyseur selon les revendications 1 à 9.
